# EUROPEAN PATENT SPECIFICATION

(11) **EP 3 407 215 B1**
(45) Date of publication and mention of the grant of the patent: **04.08.2021**
(21) Application number: 18173303.1
(22) Date of filing: 18.05.2018
(51) Int. Cl.: G06F 16/955

(54) **METHOD, DEVICE, AND COMPUTER-READABLE STORAGE MEDIUM FOR COLLECTING INFORMATION RESOURCES**
VERFAHREN, VORRICHTUNG UND COMPUTERLESBARES SPEICHERMEDIUM ZUM SAMMELN VON INFORMATIONSRESSOURCEN
PROCÉDÉ, DISPOSITIF ET SUPPORT D'INFORMATIONS LISIBLE PAR ORDINATEUR POUR COLLECTER DES RESSOURCES D'INFORMATIONS

(30) Priority: 25.05.2017 CN 201710379661
(43) Date of publication of application: 28.11.2018
(73) Proprietor: Beijing Xiaomi Mobile Software Co., Ltd., Beijing 100085 (CN)
(72) Inventor: BAO, Xiehao, Beijing, 100085 (CN); NIU, Kun, Beijing, 100085 (CN); LIU, Bo, Beijing, 100085 (CN)
(74) Representative: Jeffrey, Philip Michael

(56) References cited:
- US-A1- 2013 332 806
- US-A1- 2014 310 283
- US-A1- 2014 359 488
- Victor Agreda ET AL: "How To Use Pocket, the Convenient Save It For Later Service", , 6 December 2016 (2016-12-06), XP055495375, Retrieved from the Internet: URL:https://web.archive.org/web/2016120618 1421/https://thenextweb.com/lifehacks/2012 /08/09/deep-dive-pocket-beautiful-save-lat er-service/ [retrieved on 2018-07-25]
- Victor Agreda ET AL: "The ins and outs of Instapaper", , 26 October 2016 (2016-10-26), XP055495374, Retrieved from the Internet: URL:https://web.archive.org/web/2016102615 0536/http://thenextweb.com:80/lifehacks/20 12/08/08/deep-dive-into-instapaper-how-to- use-it-and-tips-for-power-users/ [retrieved on 2018-07-25]
- Anonymous: "Handling App Links | Android Developers", , 29 January 2017 (2017-01-29), XP055495116, Retrieved from the Internet: URL:https://web.archive.org/web/2017012918 2449/https://developer.android.com/trainin g/app-links/index.html [retrieved on 2018-07-25]

## Description

### TECHNICAL FIELD

The present disclosure relates to internet technologies, and more particularly to a method, a device, and a computer-readable storage medium for collecting information resources.

### BACKGROUND

Since the collecting function can provide a user with personalized information resource arrangement, a user can quickly and easily find the information resources that he particularly focuses on again and does not have to search among a huge quantity of information resources, which therefore significantly improves user experience. Under this premise, the present applications generally provide the function of collecting information resources.

When the information resources are collected with the related art, usually each application provides a user with its own collection entrance. For example, when a user is browsing an article with a news application, the current page displays a virtual collection button. Alternatively, the user clicks the upright corner of the current page to bring up the virtual collection button. When the user clicks the virtual collection button, the article can be collected in the application's favorites.

During the implementation of the present disclosure, the inventor found that at least the following issues exist in the related art.

In terms of the above collecting method, since the collecting function for the application is isolated and independent from each other and the collected information resources may be scattered in each application's favorites, it makes the management uneasy. US20130332806A1 discloses a method for collecting webpages/links from communications and documents for later reading. User interface elements allow a user to select multiple webpages or links at once for addition to a reading list or other data structure for later reading. The selection mode may be entered using a variety of inputs. Visual, audio, or force feedback can be provided to inform the user that the selection mode has been entered. In the selection mode, a check box or other suitable user interface element can be provided that allows a user to select individual pages to be included in the reading list all at once. Once the selection mode is entered, another user interface element can be provided that allows the user to select all available webpages or links for inclusion in the reading list or other data structure. Both Pocket and Instapaper can save the page that a user is reading. Then the user can read the pages that have saved in Pocket or Instapaper on different devices which support Pocket plugin or Instapaper plugin. Tapping a link often results in the system asking the user which app should handle that link. Android 6.0 and higher allow an app to designate itself as the default handler of a given type of link. If the user doesn't want the app to be the default handler, they can override this behavior from Setting.

US 2014/310283 discloses a method of combining activity history on a device.

US 2014/0359488 A1 discloses an operating system of a computer that provides an interface, such as an application programming interface, through which applications on that computer can store link data in a consistent format across applications and resources. Thus, when an application stores link data, it sends a command to the operating system providing the link data, invoking a command to store the link data. When an application retrieves link data, it sends a command to the operating system to retrieve link data. Thus, an application can store link data for a history of resources accessed, favorite resources accessed, and other types of resources to be accessed. As a result, the operating system provides a single mechanism for a heterogeneous set of applications and a heterogeneous set of resources to store link data in a single repository.

### SUMMARY

There are provided a method, a device and a computer-readable storage medium for collecting information resources.

According to a first aspect of the present disclosure, there is provided a method for collecting information resources. The method may include: acquiring key information of information resources to be collected by an operating system of a terminal when a collect event occurred on a display page of any application has been monitored, the collect events each corresponding to a selection by a user of a collect button displayed on the display page, where the display page is configured to display the information resources to be collected and the key information identifies the information resources to be collected; and storing the key information of the information resources to be collected in a centralized favorites, where the centralized favorites is configured to display key information of collected information resources which come from at least one application on a specified interface.

According to a second aspect of the present disclosure, there is provided a terminal for collecting information resources. The terminal may include: a processor; and a memory storage storing executable instructions executed by the processor; wherein the processor is configured to acquire key information of information resources to be collected by an operating system of a terminal when a collect event occurred on a display page of any application has been monitored, the collect events each corresponding to a selection by a user of a collect button displayed on the display page, where the display page is configured to display the information resources to be collected and the key information identifies the information resources to be collected; and store the key information of the information resources to be collected in a centralized favorites, where the centralized favorites is configured to display key information of collected information resources which come from at least one application on a specified interface.

According to a third aspect of the present disclosure, there is provided a computer-readable storage medium having stored therein computer program instructions. The computer program instructions, when executed on a processor, cause the processor to perform the following method of: acquiring key information of information resources to be collected by an operating system of a terminal when a collect event occurred on a display page of any application has been monitored, the collect events each corresponding to a selection by a user of a collect button displayed on the display page, where the display page is configured to display the information resources to be collected and the key information identifies the information resources to be collected; and storing the key information of the information resources to be collected in a centralized favorites, where the centralized favorites is configured to display key information of collected information resources which come from at least one application on a specified interface.

It is to be understood that both the foregoing general description and the following detailed description are exemplary and explanatory only and are not restrictive of the invention, as claimed.

### BRIEF DESCRIPTION OF THE DRAWINGS

Fig. 1A is an interface diagram of a terminal shown in accordance with an example;
Fig. 1B is an interface diagram of a terminal shown in accordance with an example;
Fig. 1C is an interface diagram of a terminal shown in accordance with an example;
Fig. 2 is a flow chart of a method for collecting information resources relying on bottom-layer capability of a system shown in accordance with an example;
Fig. 3 is an interface diagram of a terminal shown in accordance with an example;
Fig. 4 is an interface diagram of a terminal shown in accordance with an example;
Fig. 5 is an interface diagram of a terminal shown in accordance with an example;
Fig. 6 is an interface diagram of a terminal shown in accordance with an example;
Fig. 7 is a flow chart of a method for collecting information resources relying on an interface shown in accordance with an example;
Fig. 8 is a flow chart of a method for displaying information resources shown in accordance with an example;
Fig. 9 is an interface diagram of a terminal shown in accordance with an example;
Fig. 10 is a flow chart of a method for looking up information resources shown in accordance with an example;
Fig. 11 is an interface diagram of a terminal shown in accordance with an example;
Fig. 12 is a block diagram of a device for collecting information resources shown in accordance with an example;
Fig. 13 is a block diagram of a device for collecting information resources shown in accordance with an example;
Fig. 14 is a block diagram of a device for collecting information resources shown in accordance with an example;
Fig. 15 is a block diagram of a device for collecting information resources shown in accordance with an example;
Fig. 16 is a block diagram of a device for collecting information resources shown in accordance with an example;
Fig. 17 is a block diagram of a device for collecting information resources shown in accordance with an example; and
Fig. 18 is a block diagram of a terminal for collecting information resources shown in accordance with an example.

### DETAILED DESCRIPTION

Hereinafter examples will be described in detail, the examples are shown in the drawings. In the following description when referring to the accompanying drawings, the same numbers in different drawings represent the same or similar elements unless otherwise indicated. The examples described in the following description do not represent all examples consistent with the present disclosure. Rather, they are merely examples of devices and methods consistent with some aspects of the present disclosure as detailed in the appended claims.

Before the detailed description of the examples of the present disclosure, some terms in the present disclosure are briefly introduced in advance.

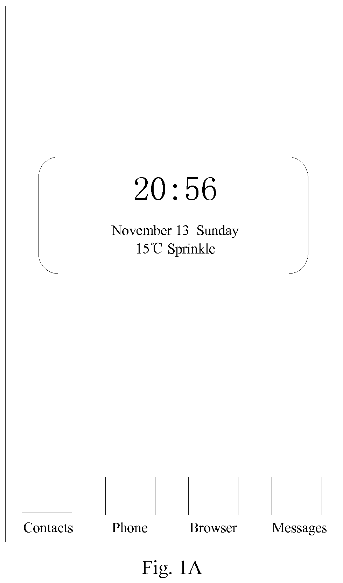

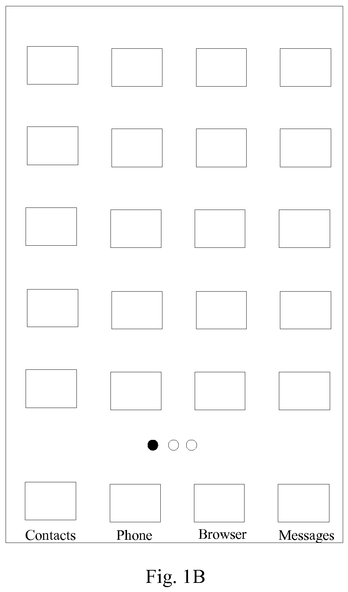

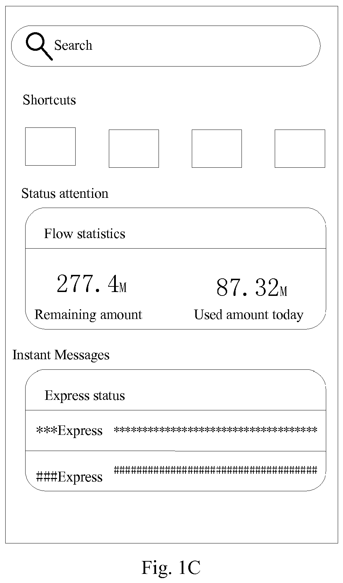

Specified interface: it may refer to the functional interfaces other than the main screen interface as shown in Fig. 1A and the application interface to display installed applications as shown in Fig. 1B, which is a hiboard interface. The hiboard interface usually is a leftmost functional interface among all the functional interfaces on the terminal screen. Swiping right cross the main screen interface can bring up the hiboard interface on the terminal screen. As shown in Fig. 1C, currently the content displayed on the hiboard is usually summarized into three big categories. The first category is shortcut function, the second category is message, and the third category is status attention.

The shortcut function aggregates the direct entrances for all types of applications or functions. It helps a user skip the complex steps that user usually needs to go through to look for applications or functions by applying the recommended algorithms or the application's functions directly, which helps the user use the terminal more effectively without any concerns. Message usually is closely related to user's current situation. When some conditions (time, location, actions in the application, etc.) are satisfied, it provides a user with valuable and timely content. For example, instantaneous message may include travel suggestion, delivery tracking, music and radio, train ticket, fight ticket, group buying vulture, movie ticket, weather forecast, daily greeting, agenda alert, etc. Status attention provides experience like little desktop tools, such as flow statistics or sports information, etc.

In the example of the present disclosure, the abovementioned status attention is extended by adding a little desktop tool with collecting function, such as an icon, an option, a card, a floating animation, etc., on the desktop. The little desktop tool with the collecting function is also called a centralized favorites. Of course, it may also be called a collection card, a collection assistant, a collection manager, which is not limited in the example of the present disclosure. The centralized favorites may aggregate the information resources originally scattered in the favorites of each application in order to centrally manage the stored information resources of a plurality of applications. The applications include both third-party applications and applications coming with the terminal.

Methods for collecting, displaying and looking up information resources will be explained hereafter in four aspects.

In the first aspect, the examples of the present disclosure provide a method for collecting information resources that relies on the bottom-layer capability of a system.

Adopting this method can effectively keep following scenarios with complex operations and low efficiency from happening.
1. Since the collected information resources are scattered in each application's favorites, when looking up an information resource, a user may forget which application's favorites the information resource is collected in and has to traverse every single application to look it up.
2. Even through the user knows which application's favorites the information resource is collected in, he may still need to perform multi-step operations in the application to find the information resource. For example, the user may need to successively click the application icon→click the virtual button to enter the personal homepage→click the favorites on the personal homepage, etc.

For the detailed implementation procedure for the method for collecting information resources that relies on the bottom-layer capability of the system provided by the examples of the present disclosure, please refer to the example below.

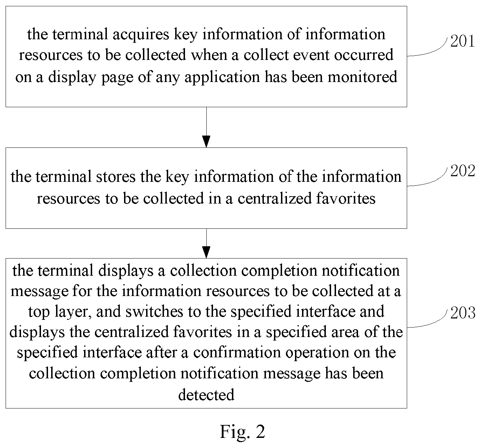

Fig. 2 is a flow chart of a method for collecting information resources that relies on the bottom-layer capability of a system. The method may include the following steps. This method is performed by a terminal, such as the operating system of the terminal or an application in the terminal. The application may be an application coming with the terminal or a third-party application, which may further be an application granted with the permission to manage the terminal.

In step 201, when a terminal has monitored a collect event that happens on a display page of any application, it acquires the key information of the information resources to be collected.

The terminal catches the collect event that happens on the display page of each application such that the collected information resources in each application is aggregated to a centralized favorites. In other words, the terminal is responsible for monitoring the collect events that happen on the pages. The terminal monitors every installed application, including not only third party applications but also the applications that come with the terminal, which is not limited by the examples of the present disclosure.

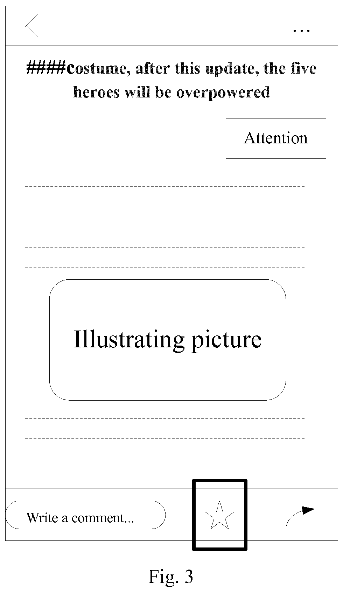

Any application's display page can be illustrated in Fig. 3. Taking the collect event being a conformation operation on the collect button displayed on the display page as an example, a collect button (the part within the black box) will show up in the lower right corner in Fig. 3. After a user selects the collect button, the terminal will catch the collect event so that the content on the display page becomes the information resource to be collected.

It should be noted that the categories of the information resources may cover all aspects, for example, articles, videos, product information, series information, etc. Fig. 3 just takes collecting an article as an example for explanation.

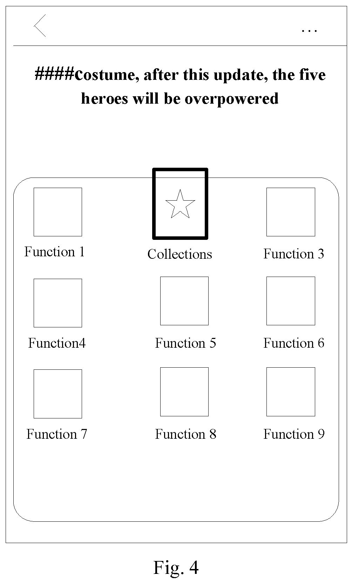

In some examples, in addition to the method to display the collect button in Fig. 3, there may be other methods as shown in Fig. 4. No matter what method is adopted, the terminal can always pre-collect and analyze different types of display pages in order to accurately catch the collect events by monitoring pages.

In step 202, the terminal collects the key information of the information resources to be collected in a centralized favorites.

In the examples of the present disclosure, the key information of the information resources from a plurality of applications is managed in the centralized favorites. That is, when collecting an information resource, the terminal stores the key information of the information resource to be collected in a centralized favorites.

The key information of an information resource may specifically refers to the information that can uniquely identify the information resource. For example, when the information resource is a website article, the key information may be the headline information and illustrating pictures of the website article. When the terminal obtains the key information of an information resource to be collected, based upon the category of the information resource to be collected, the content included in the key information is usually different. That is, for an information resource to be collected, the terminal first determines its category and then obtains the key information of the information resource to be collected based upon the category.

In the examples of the present disclosure, the information resources to be collected generally can be divided into webpage content and non-webpage content. The webpage content may include original webpages rendered by an application, for example, a webpage for today's headlines from a news application, or re-rendered webpages displayed by an application but originally rendered by another application, for example, a gourmet food webpage rendered by a gourmet food application but displayed by a social networking application.

For non-webpage content, the main scenario could be: when a user chats to his friends through a social networking application, the user may be interested in or focus on some contents on the information exchange pages posted by friends. The user may trigger the collect event at that moment. The terminal in the examples of the present disclosure can also catch this category of collect events. For example, a user may collect address information sent from friends. Friend is a concept in social networking applications. In social networking applications, each user has a corresponding user relation chain (also referred to as an address book), which shows all the friends of the user. Two parties being friends to each other can exchange information, for example, by way of voice chat, video chat or text chat, transfer files and look up the status of each other.

That is, the terminal acquires the key information of the information resources to be collected based upon the category of the information resources to be collected usually with the following two methods.

In the first method, when the information resource to be collected is webpage content, the key information at least includes headlines and illustrating pictures of the information resource.

Regarding the first method and referring to Fig. 3, "###costume, after this update, the five heroes will be overpowered" becomes the headline. Illustrating pictures on the display page become the illustrating pictures for the information resource to be collected.

In the follow-up procedure, if the information resource to be collected needs to be displayed on the specified interface, usually the abovementioned headline and illustrating pictures are used to characterize the information resource to be collected. Therefore, the key information includes at least the headline and illustrating pictures. If the current display page does not include any illustrating pictures, certainly illustrating pictures may not be obtained. Alternatively, if the current display page includes a plurality of illustrating pictures, one of the illustrating pictures may also be selected randomly.

In some examples, in addition to the abovementioned content, the key information may also include the address link information corresponding to the information resource to be collected, i.e., the Uniform Resource Locator (URL) of the current display page. Only based upon the URL, the detail content of the information resource to be collected may be pulled from server later. Additionally, the key information may also include collect time, information of source, etc., which is not limited by the examples of the present disclosure. The information of source is used to characterize the application where the collect event comes from. For example, it may be the application name.

The second method, if the information resource to be collected is non-webpage content, then at least the content keywords of the information resource to be collected could be taken as the key information of the information resource to be collected.

For the second method, the abovementioned keywords may be some key indicative informational words extracted from the article of the information resource to be collected. In detail, it can be realized through word segmentation and semantic analysis to the content of the information resource to be collected. Alternatively, the content keywords could be some beginning words of the content of the information resource to be collected, for example, some noun phrases included in the beginning sentences in the whole content. The method to obtain the content keywords is not limited by the examples of the present disclosure.

In step 203, the terminal displays the collection completion notification for the information resource to be collected at the top layer. When the terminal detects that user has confirmed the collection completion notification, it switches to the specified interface and displays the centralized favorites in a specified area on the specified interface.

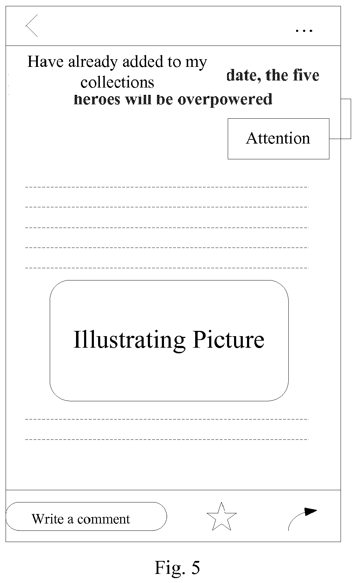

In this step, after the terminal completes collecting the information resource to be collected, it will notify the user of the reminder. Referring to Fig. 5, the collection completion notification may be a text message such as "has been successfully added to my favorites". The collection completion notification is usually displayed at the top layer of the terminal screen in order to guarantee user to directly see the collecting result of the information resource to be collected.

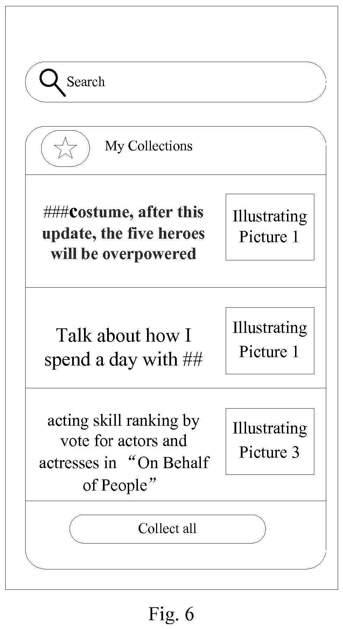

Herein, in addition to reminding the user, the collection completion notification may also be the operation entrance for switching to the specified interface. That is, after the terminal detects that user has confirmed the collection completion notification, for example, the user clicks the collection completion notification as shown in Fig. 6, the terminal controls the terminal to switch to the specified interface and display the centralized favorites in the specified area of the specified interface.

Herein, as shown in Fig. 6, the key information of the just collected information resource is located at top of the specified area. In other words, after the user triggers the collection completion notification, the terminal will switch to the specified interface and display the key information of the just collected information resource in the specified area for the convenience of the user to look it up.

With reference to the abovementioned explanation to the specified interface and Fig. 6, in the examples of the present disclosure, a specified area devoted to displaying the centralized favorites is set apart. The centralized favorites is displayed in specified area that is set apart in a form that is similar to a card.

It is necessary to explain that, in the example of the present disclosure, information resources are aggregated by centrally collecting the information resources collected by users in various applications through the centralized favorites. Besides, in addition to that the key information of the plurality of information resources aggregated in the centralized favorites can be stored locally, the example of the present disclosure also supports to upload them to a first server for backup. The terminal may upload the key information of all the information resources collected in the centralized favorites to the first server with the specified account logged in by user. In addition to this collecting method, the example of the present disclosure also supports the user to manually add the information resources to be collected to the centralized favorites. For example, the user may also collect the information resources with a regular method, such as sharing or duplicating the address link.

With the method for collecting the information resources provided by the example of the present disclosure, since the terminal monitors the collect events that happen on each application's display page, it may aggregate and centrally collect the information resources originally scattered in each application and store them in a centralized favorites for the convenience of the user to centrally manage each collected information resource through the centralized favorites, which is more intellectualized.

In summary, the method for collecting the information resources through the bottom-layer capability of the system has been introduced above. Additionally, the example of the present disclosure also supports the method for collecting the information resources through a connector to replace the above method for collecting the information resources through the bottom-layer capability of the system.

Another example, not part of, but useful for understanding the invention of the present disclosure provides a method for collecting information resources that relies on an interface.

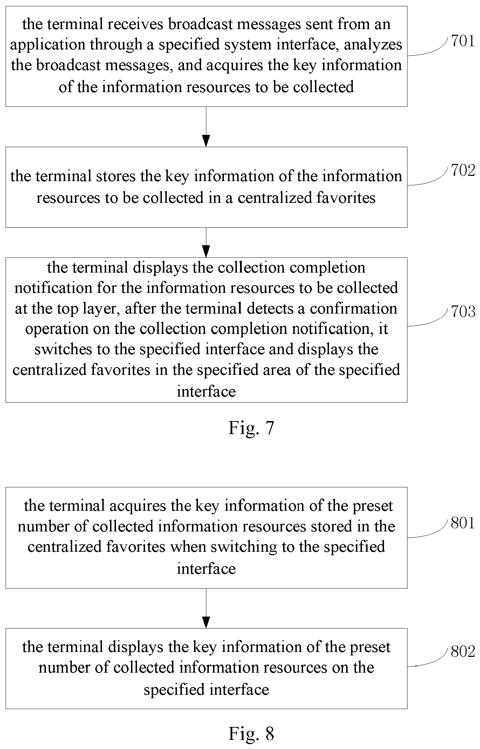

Referring to Fig. 7, it shows a flowchart of implementing the method for collecting information resources that relies on the interface, including the following steps. This method is performed by a terminal, for example, the operating system of the terminal or an application in the terminal. The application may be an application coming with the terminal or a third-party application, which may further be an application granted with the permission to manage the terminal.

In step 701, the terminal receives broadcast messages sent from an application through a specified system interface, analyzes the broadcast messages, and obtains the key information of the information resources to be collected.

It is necessary to explain first that the application mentioned in this step could be any application in the terminal. Not only could it be a third party application but also an application that comes with the operating system, which is not limited by the examples of the present disclosure.

In the example of the present disclosure, the specified system interface is for each application that is open to the terminal and is an open interface used by each application to report its collect events to the terminal. That is, with this method for collecting the information resources, the terminal does not need to monitor the collect events that happen on the display page of each application. Instead, when a collect event happens on the display page of the application, the application actively broadcasts the message through the specified system interface to the terminal so that the terminal completes collecting the information resources based upon the received the broadcast message.

Herein, the explanation of the collect event refers to abovementioned step 201, which is not repeated here.

If a collect event happens on the display page of an application, the application will respond to the collect event instantaneously and render a broadcast message for the collect event based upon a pre-specified interface standard. If the information resource to be collected is webpage content, the broadcast message may include headlines, illustrating pictures, address link information and the like of the information resource to be collected. If the information resource is non-webpage content, the broadcast message may include the content keywords of the information resource to be collected.

Additionally, taking the operating system of the terminal collecting the information resources as an example, for the convenience of data transmission between the application and the operating system, the broadcast messages may also be compressed, which is not limited by the examples of the present disclosure. After the operating system receives the broadcast messages through the specified system interface, it may analyze the broadcast messages based on the abovementioned interface standard, in order to extract the key information of the information resources to be collected from the broadcast messages.

In step 702, the terminal stores the key information of the information resources to be collected in a centralized favorites.

This step is the same as step 202, which is not repeated here.

In step 703, the terminal displays the collection completion notification for the information resources to be collected at the top layer. After the terminal detects a confirmation operation on the collection completion notification, it will switch to the specified interface and display the centralized favorites in the specified area of the specified interface.

This step is the same as step 203, which is not repeated here.

With the method for collecting the information resources provided by the examples of the present disclosure, since each application is provided with a system interface, when a collect event happens on the page, the matching application will actively broadcast the message to the terminal through the system interface. The terminal will further collect the information resources originally scattered in each application and store them in the centralized favorites for the convenience of the user to centrally manage the collected information resources through the centralized favorites, which is more intellectualized.

In summary, two different methods for collecting information resources have been introduced. The method for collecting information resources that relies on the bottom-layer capability of the system, subject to the present invention, is suitable for the application that is not connected to the specified system interface while the method for collecting information resources that relies on the interface, while not part of the present invention, is suitable for the application that is connected to the abovementioned specified system interface. No matter which method is adopted to aggregate the information resources from each application to the centralized favorites, the examples of the present disclosure can always display the key information of the information resources collected in the centralized favorites with the following method.

In the third aspect, the examples of the present disclosure provide a method for displaying information resources.

Referring to Fig. 8, it shows a flowchart of a method for displaying information resources, including the following steps.

In step 801, when switching to the specified interface, the terminal acquires the key information of the preset number of collected information resources stored in the centralized favorites.

In the example of the present disclosure, as mentioned above, the centralized favorites aggregates and stores the key information of the information resources that have been collected by the user from each application. Therefore, there could be numerous information resources in the centralized favorites. However, the size of the specified area where the centralized favorites is displayed on the specified interface is fixed. Therefore, it is necessary to filter some information resources among the numerous collected information resources and display the key information of the information resources in the specified area.

Herein, the information resources could be filtered based upon the collection time. That is, when the key information of the preset number of collected information resources that have been stored in the centralized favorites is obtained, the following method may be adopted: based upon the size of the specified area, the quantity of the information resources displayable in the specified area will be determined. Based upon the collection time order from the latest to the earliest, the latest collected information resources with a number matching with the preset will be selected from the centralized favorites.

In step 802, the terminal displays the key information of the preset number of collected information resources on the specified interface.

Herein, the key information of the preset number of collected information resources may also be displayed in the collection time order. For example, in the collection time order from the latest to the earliest, the key information of the preset number of collected information resources is displayed in the information entries in the specified area. Referring to Fig. 6, the key information of a collected information resource takes one information entry. Generally, the key information of the latest collected information resource is displayed at the top of the specified area while the key information of the earliest collected information resource is displayed at the bottom of the specified area.

For example, referring to Fig. 6, the preset number is 3, that is, three pieces of key information of the collected information resources is displayed in the specified area. In some examples, the selected key information of the preset number of collected information resources is displayed in the collection time order from the latest to the earliest. Referring to Fig. 3, based upon the collection time, the message "###costume, after this update, the five heroes will be overpowered" is displayed is later than the message "talk about how I spend a day with ##" at the top of the specified area, while the message "talk about how I spend a day with ##" is displayed later than message "acting skill ranking by vote for actors and actresses in "On Behalf Of People"" that is displayed at the bottom of the specified area.

The first point that needs to be explained is, if at that moment another information resource is collected, the key information of the just collected information resource will replace the message "###costume, after this update, the five heroes will be overpowered" in Fig. 6 to be displayed at the top of the specified area. Accordingly, the message "acting skill ranking by vote for actors and actresses in "On Behalf Of People"" will disappear from the specified area.

The second point that needs to be explained is, since the number of characters for each headline may not be the same, when the number of the characters for a headline is greater than the threshold, only part of the headline may be displayed in the corresponding information entry.

The third point that needs to be explained is, for some non-webpage information resources, illustrating pictures may not be included. Alternatively, for some webpage information resources, illustrating pictures may not be included either. For these two circumstances, the terminal may assign default illustrating pictures to the corresponding information resources.

In some examples, in addition to the preset number of collected information resources, other collected information resources in the centralized favorites could be displayed with the following methods.

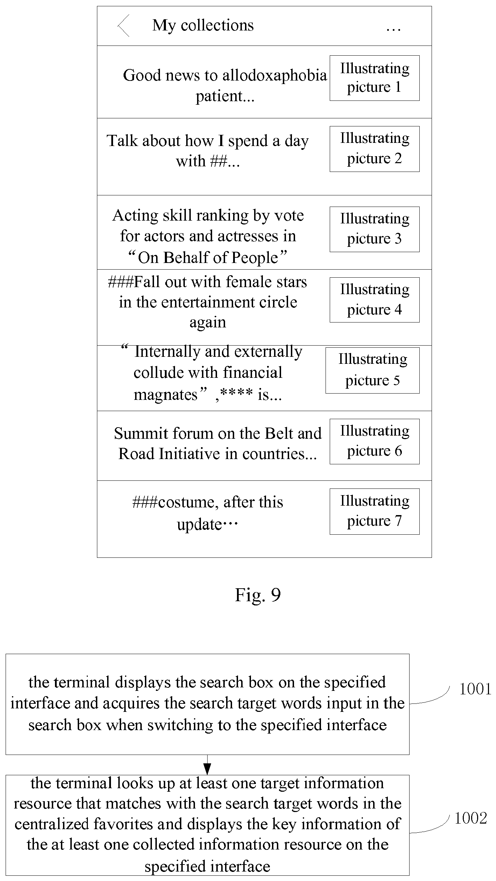

For example, a show-detail button could be displayed in the specified area where the centralized favorites is displayed. Referring to Fig. 6, the "Collect All" button located at the end of the specified area may be a manifestation of the show-detail button. After the terminal detects that a user has clicked the show-detail button, the key information of the plurality of collected information resources stored in the centralized favorites is also displayed in the collection time order from the latest to the earliest. As shown in Fig. 9, the key information of the latest collected information resource among the plurality of collected information resources is displayed at the top of the page while the key information of the earliest collected information resource is displayed at the bottom of the page.

Additionally, if there are quite a few of information resources stored in the centralized favorites, when a new page is opened to display the stored information resource, limited by the size of the terminal screen, only part of the key information of the information resource may be displayed. For this scenario, the example of the present disclosure also supports that when the terminal detects a slide operation on the new page, in the collection time order from the latest to the earliest, the key information of the collected information resources other than the plurality of collected information resources is displayed in a scrolling manner for the convenience of the user to look up all the collected information resources.

In some examples, after the terminal detects that a user completes the confirmation operation on the show-detail button, in addition to displaying the stored information resources directly in the collection time order from the latest to the earliest, the example of the present disclosure also supports to display the stored information resources by category. The procedure is detailed as following.

Based upon the categories of the information resources, the key information of the plurality of collected information resources in the centralized favorites is displayed. Among the plurality of information resources, information resources that belong to the same category are displayed next to each other. Among the information resources that belong to the same category, the earlier the information resource is collected, the more leading position in the specified area its key information is displayed at.

In other words, although each collected information resource has been categorized, the at least one the information resources that belong to the same category still needs to be displayed in the collection time order from the latest to the earliest.

The webpage information resources are categorized by domain names. That is, the address link information corresponding to each collected information resource is obtained; the domain name information is extracted from the address link information corresponding to the collected information resource; at least two information resources with the same domain name are determined to belong to the same information resource category. For example, for a video application, the domain name in the address link information corresponding to the information resource from this video application usually contains the video website name. For any two information resources, as long as the video website name shows up in both of the corresponding address link information, the terminal may group them into the same category.

Non-webpage information resources may belong to one category. Alternatively, by recognizing the extracted content keywords, the information resources will be further categorized granularly based upon the recognition result, which is not limited by the example of the present disclosure.

In some examples, deleting collected information resources is also supported by the example of the present disclosure.

Continuing with abovementioned example for the plurality of collected information resources, in the information entries where the key information of the plurality of collected information resources is located, a delete button could be displayed respectively. After the terminal detects the conformation operation on the delete button matching with any collected information resource, the collected information resource as selected will be deleted from the centralized favorites.

In some examples, for each information resource that is currently displayed, no matter it is displayed in the specified area or in a new page by selecting the show-detail button, the example of the present disclosure also supports the user to look up the detail content of the information resource in addition to the key information. The detail content of the selected specified information resource could be displayed by the terminal through not only a systematic network view component but also the application corresponding to the specified information resource. A user may set up the method to display. For example, after the selected operation for the specified information resource is detected by the terminal, a pop-up window for the user to select the method to open a page pops up. The systematic network view component may be the webview component.

Herein, when the detail content of the specified information resources is obtained, the following method may be adopted: after the selected operation for any currently displayed key information is detected by the terminal, if the selected specified information resource is webpage content the specified information resource is obtained from the second server based upon the address link information for the specified information resource. Alternatively, if the specified information resource is non-webpage content the specified information resource is obtained locally based upon the content keywords contained in the selected key information.

For the method for displaying by an application, the detail content of the specified information resource actually is obtained by the application. For example, after the application is opened, the related pages are loaded from the second server by the application. That is, after the selected operation for any currently displayed key information is detected, if the selected specified information resource is webpage content, it determines a target application that matches with the specified information resource, i.e., an application where the specified information resource comes from based upon the address link information of the specified information resource. The target application then is opened and displays the specified information resource.

Herein, in the procedure from opening the target application through displaying the specified information resource by the target application, it includes the step to obtain the detail content loaded from the second server by the target application.

Herein, when determining which application the specified information resource comes from based upon its corresponding address link information, usually the following method is adopted: based upon the domain name in the corresponding address link information of the specified information resource, it determines which application the specified information resource comes from. In other words, the example of the present disclosure has stored a list of the corresponding relationship between the domain names and the applications locally in advance. Based upon the abovementioned domain name in the address link information, the relationship matchup is looked up in the list of the corresponding relationship between the domain names and the applications so that it can be accurately determined which application the specified information resource comes from.

It is necessary to explain that, the list of the corresponding relationship between the domain names and the applications is updatable. That is, in the examples of the present disclosure, the terminal may receive an update command for the list from the first server and update the list in accordance with the update command. That is, people maintain the abovementioned list. The first server may send an update command to the terminal periodically or send a real-time update command to the terminal when there are updates so that the terminal updates the list in time in accordance with the update command.

In some examples, when the specified information resource abovementioned or any information resource whose detail content is going to be displayed is graphic content, for example, a webpage about article information, take the specified information resource identifying the information resources of graphic content as an example, before the specified information resource is displayed, it will be reformatted and then the reformatted information resource will be obtained and displayed.

Herein, the purpose for reformatting is that: on one hand, a plurality of information resources with different webpage display styles may have a standardized display style; on the other hand, redundant information, such as advertisement and other news information, etc., that is unrelated to the detail content in the original webpage may be filtered out.

In some examples, if the processed information resources abovementioned are displayed by the network view component, on the page where the processed specified information resources are displayed, a show-experience setting option may also be displayed. The show-experience setting option at least includes the background color or font size adjustment options. The background color adjustment option includes at least two background color pulldown sub-options and the font size adjustment option includes at least two font size pulldown sub-options. Users may adjust the background color and font size through the background color pulldown sub-options and the font size pulldown sub-options.

In some examples, for some information resources, there may be dynamic updates. Therefore, for each information resource collected in the centralized favorites, the terminal may periodically detects if there are dynamic updates for each collected information resource. If there are updates for an information resource, the key information of the information resource and the update notification for the information resource will be displayed at the top of the specified area in order to notify the user of the real-time reminder. The information resource category that may have dynamic updates includes but is not limited to the following:

Reminder of product price trend and price reduction: when the collected information resource is the product introduction information, it may track the price change for the product for a long time and it may be set to notify users of a reminder once the price is reduced or is reduced by a certain margin.

Reminder of TV series updates: when the collected information resource is a video, the series updates may be obtained through a video service end to provide the series follow-up capability and notify users of a reminder once there are new series updates.

Reminder of electronic book updates: when the collected information resource is an electronic book, the book update status could be obtained through an electronic book service end to provide the book follow-up capability and notify users of a reminder once there are new book chapter updates.

Updates for content related to person: when the collected information resource is a person/group introduction or encyclopedia, the status update and the related news for the collected person could be recommended to user.

Reminder of the latest business status: when the collected information resource is a business introduction, once the business has the latest status, for example, promotions (new group buy, price reduction, etc.), store status changes, or related information, users are also notified of the reminder.

It is necessary to explain that currently every application has the message push feature and may notify users of a real-time reminder once there are related dynamic updates. Therefore, the terminal may catch the dynamic updates for each category of information resources by obtaining the message pushed by each application. Of course, the dynamic updates could be obtained by the terminal through other methods, which is not limited by the example of the present disclosure.

With the method for displaying information resources provided by the example of the present disclosure, since each information resource stored in the centralized favorites is displayed on the specified interface, a certain information resource could be quickly and easily looked up without complex multi-step operation, which provides a quick and effective lookup entrance and is more intellectualized.

Since the key information of information resources from a plurality of applications is stored in the centralized favorites and a user may need to look up one of the information resources, the example of the present disclosure also provides a method for looking up information resources in order to help the user quickly look up the target information resource among the numerous information resources that are stored.

In the fourth aspect, the examples of the present disclosure provide a method for looking up information resources.

Referring to Fig. 10, it shows a flow chart a method for looking up information resources, including the following steps:

In step 1001, when switching to the specified interface, the terminal displays the search box on the specified interface and the search target words input in the search box is obtained.

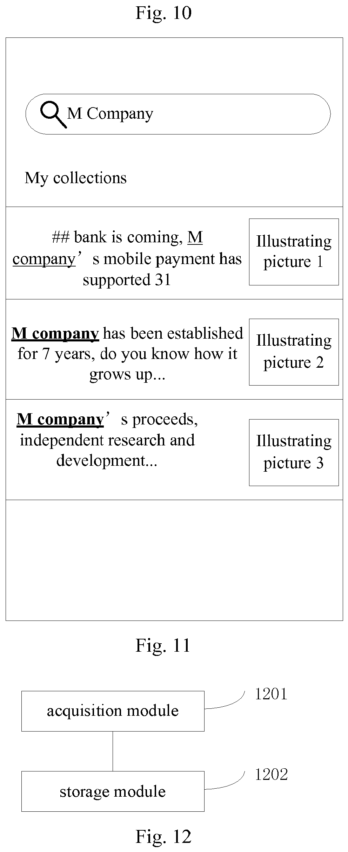

In this step, when the terminal switches from any interface to the specified interface, all as shown in Fig. 11, a search box is displayed in the specified interface. Usually, after the terminal detects that user executes a selected operation on the search box, a cursor will show up in the search box and an input interface will be brought up for the user to input. Afterwards, the terminal obtains the user input from the search box and takes the input as the search target words.

In step 1002, the terminal looks up at least one target information resource that matches up with the search target words in the centralized favorites and the key information of the at least one collected information resource will be displayed on the specified interface.

As mentioned above, information resources are categorized into webpage content and non-webpage content. When the target information resource is looked up, for the webpage information resources, the target information resource is looked up in the headline information included in the key information. For the non-webpage information resources, the target information resource is looked up in the content keywords included in the key information. That is, the following method may be adopted to look up at least one target information resource that matches up with the target search words.

At least one piece of headline information is obtained from all the key information stored in the centralized favorites. For each item in the at least one piece of headline information, if a piece of headline information includes the target search words, the collected information resource corresponding to the headline information is determined as the target information resource.

Alternatively, at least one content keyword is obtained from all the key information stored in the centralized favorites. For each item in the at least one content keyword, if one content keyword includes the target search words, the collected information resource corresponding to the content keyword is determined at the target information resource.

In some examples, for the non-webpage information resources, since they are directly stored locally, the target search words can be looked up in the whole article of the locally stored information resource based upon the target search words.

In the example of the present disclosure, after at least one target information resource that matches up with the target search words is found, its key information can be displayed on the specified interface with the method mentioned above, which is be not repeated here. After the selected operation on any target information resource is executed by a user is detected, same as above, the selected target information resource is displayed by the webview component or the determined target application. The selected target information resource comes from the determined target application. That is, a user collects the target information resource through the target application.

In some examples, after at least one target information resource is found, it may also be displayed in the specified area. If the number of the at least one target information resource is less than the maximum displayable number of the information resources, all the target information resources may be displayed simultaneously in the specified area. If the number of the at least one target information resource is greater than the maximum displayable number of the information resources, the latest collected information resources with a preset number that matches with the maximum number of the information resources will be selected. Afterwards, in the collection time order from the latest to the earliest, the key information of the preset number of the information resources is displayed in the specified area.

In some examples, for any target information resource displayed in the specified area, if its key information contains content keywords, as shown in Fig. 11, the search target words that show up in the content keywords are displayed in a way different from the way in which other words in the content keywords are displayed. Alternatively, if the key information of the target information resource contains headline information, the search target words that show up in the headline information are displayed in a way different the way in which other words in the headline information are displayed.

In other words, for an information resource and the key information in text form displayed in Fig. 11, if the key information in text form contains the search target words, the search target words that show up are displayed in a different way than the other contents are displayed.

In some examples, the search scope in the search box could be further expanded, not just limited to the centralized favorites. The scope can also cover other contents that are stored in the terminal other than in the centralized favorites. Other contents related to the search target words may also be displayed. Users may set up the corresponding search mechanism to determine the search scope. Additionally, for the search feature for the information resources, the terminal may also provide a feature-enable button. Users may manually enable or disable the search feature through the feature-enable button, which is not limited by the example of the present disclosure.

With the method for looking up information resources provided in the example of the present disclosure, based upon the search target words input by a user, the terminal may automatically look up the target information resource among the plurality of information resources stored in the centralized favorites. It may avoid the defect in the related art that the user has to traverse to look up the target information resource if he forgets which application's favorites the target information resource is located in and make the procedure for looking up the information resource simpler and more intellectualized.

Fig. 12 is a block diagram of a device for collecting information resources. Referring to Fig. 12, the device includes an acquisition module 1201 and a storage module 1202.

The acquisition module 1201 is configured to acquire the key information of the information resources to be collected when a terminal has monitored a collect event happened on the display page of any application, where the display page is configured to display the information resources to be collected.

The storage module 1202 is configured to store the key information of the information resources to be collectedin a centralized favorites. The centralized favorites is configured to display the key information of the collected information resources which come from at least one application on a specified interface.

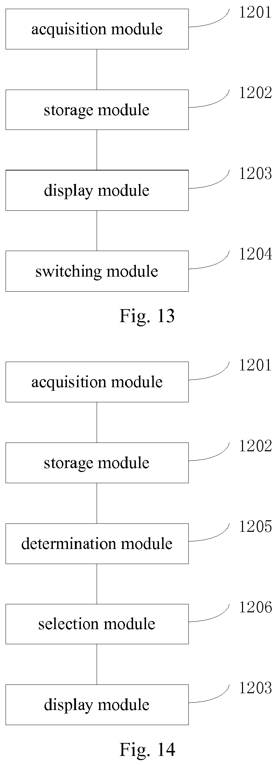

In some examples, referring to Fig. 13, the device may also include:
a display module 1203 configured to display a collection completion notification message for the information resources to be collected at a top layer;
a switching module 1204 configured to switch to the specified interface after a confirmation operation on the completion notification message has been detected;
a display module 1203 configured to display the centralized favorites in a specified area of the specified interface.

The key information of the information resources to be collected is located at a top of the specified area.

In some examples, the display module 1203 is configured to display a show-detail button in the specified area. The specified area is configured to display the centralized favorites and the show-detail button is configured to display the key information of the collected information resources.

The display module 1203 is further configured to display the key information of a plurality of collected information resources stored in the centralized favorites in a collection time order from the latest to the earliest after a selected operation on the show-detail button has been detected.

In some examples, the display module 1203 is further configured to display key information of collected information resources other than the plurality of collected information resources in a scrolling manner in a collection time order from the latest to the earliest when a slide operation has been detected.

In some examples, referring to Fig. 14, the device may also include:
a determination module 1205 configured to determine a quantity of information resources displayable in a specified area based on a footprint of the centralized favorites on the specified area during display.
a selection module 1206 configured to select a preset number of information resources with a number matching with the quantity of the information resources from the centralized favorites.

The display module 1203 is further configured to display the key information of the preset number of collected information resources in the specified area in the collection time order from the latest to the earliest.

In some examples, the determination module 1205 is further configured to determine, after a selected operation on any key information of the preset number key information is detected, a target application that matches with the specified information resource based upon the corresponding address link information corresponding to the specified information resource when the selected specified information resource is the webpage content.

The display module 1203 is further configured to open the target application and display the specified information resource through the target application.

In some examples, the determination module 1205 is configured to determine the target application that matches with the specified information resource based upon the domain name in the corresponding address link information corresponding to the specified information resource.

Where, a list of corresponding relationship between the domain names and the application is stored locally in advance.

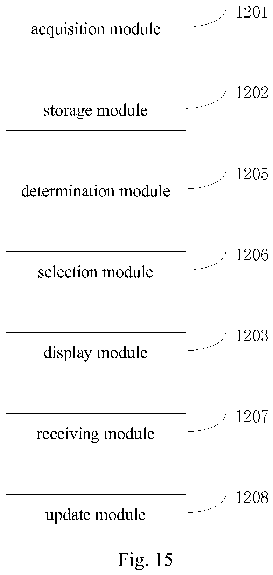

In some examples, referring to Fig. 15, the device may further include:
a receiving module 1207 configured to receive an update command from the first server; and
an update module 1208 configured to update the list in accordance with update command.

In some examples, the acquisition module 1201 is configured to determine the categories of the information resources to be collected, and acquire the key information of the information resource to be collected in accordance with the types of the information resources to be collected.

In some examples, the acquiring module 1201 is configured to take at least the headline information and illustrating pictures of the information resource to be collected as the key information of the information resource to be collected when the information resources to be collected are webpage content, and take at least content keywords of the information resources to be collected as the key information of the information resources to be collected when the information resources to be collected are non-webpage content.

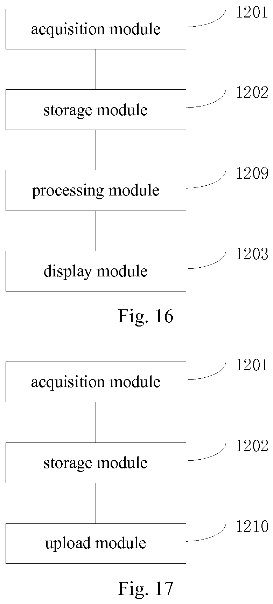

In some examples, referring to Fig. 16, the device may further include:
the acquistion module 1201 is further configured to, after a selected operation on the information resources to be collected is detected, acquire the information resource to be collected from the second server based upon the corresponding address link information when the information resources to be collected are webpage content;
a processing module 1209 configured to reformat the information resources to be collected when the information resources to be collected are graphic content;
the display module 1203 is configured to display the processed information resources to be collected.

In some examples, the display module 1203 is configured to display the processed information resources to be collected through a systematic network view component.

In some examples, referring to Fig. 17, the device may further include:
an upload module 1210 configured to upload the key information of the collected information resources stored in the centralized favorites to the first server. The first server stores the key information of the collected information resources.

With the device provided in the example of the present disclosure, since the terminal monitors the collect events that happen on each application's display page, the terminal could aggregate and centrally collect the information resources originally scattered in each application and store them in the centralized favorites for the convenience of the user to centrally manage each collected information resource through the centralized favorites, which is more intellectualized.

With respect to the device in the above examples, the specific approach for performing operations for individual module therein has been described in detail in the method examples and is not elaborated herein.

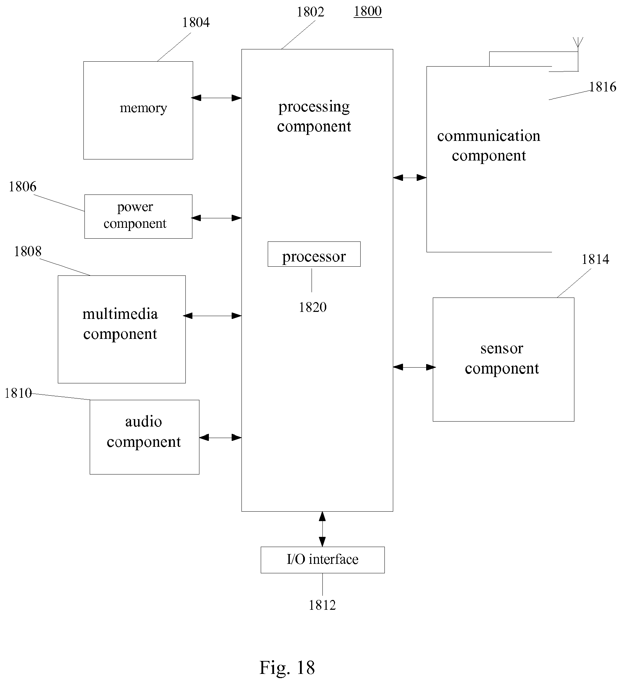

Fig. 18 is a block diagram of a terminal 1800 for collecting information resources, according to an example. For example, the terminal 1800 may be a mobile phone, a computer, a digital broadcast terminal, a messaging device, a gaming console, a tablet, a medical device, exercise equipment, a personal digital assistant, and the like.

Referring to Fig. 18, the terminal 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the terminal 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the terminal 1800. Examples of such data include instructions for any applications or methods operated on the terminal 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the terminal 1800. The power component 1806 may include a power management system, one or more power sources, and any other components associated with the generation, management, and distribution of power in the terminal 1800.

The multimedia component 1808 includes a screen providing an output interface between the terminal 1800 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 1808 includes a front camera and/or a rear camera. The front camera and the rear camera may receive an external multimedia datum while the terminal 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the terminal 1800 is in an operation mode, such as a call mode, a recording mode, and a voice recognition mode. The received audio signal may be further stored in the memory 1804 or transmitted via the communication component 1816. In some examples, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the terminal 1800. For instance, the sensor component 1814 may detect an open/closed status of the terminal 1800, relative positioning of components, e.g., the display and the keypad, of the terminal 1800, a change in position of the terminal 1800 or a component of the terminal 1800, a presence or absence of user contact with the device 1800, an orientation or an acceleration/deceleration of the terminal 1800, and a change in temperature of the terminal 1800. The sensor component 1814 may include a proximity sensor configured to detect the presence of nearby objects without any physical contact. The sensor component 1814 may also include a light sensor, such as a CMOS or CCD image sensor, for use in imaging applications. In some examples, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the terminal 1800 and other devices. The terminal 1800 can access a wireless network based on a communication standard, such as WiFi, 2G, or 3G, or a combination thereof. In one example, the communication component 1816 receives a broadcast signal or broadcast associated information from an external broadcast management system via a broadcast channel. In one example, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In examples, the terminal 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for collecting information resources.

In examples, there is also provided a non-transitory computer-readable storage medium including instructions, such as included in the memory 1804, executable by the processor 1820 in the terminal 1800, for performing the above-described methods for collecting information resources. For example, the non-transitory computer-readable storage medium may be a ROM, a RAM, a CD-ROM, a magnetic tape, a floppy disc, an optical data storage device, and the like.

In some examples, there is further provided a computer-readable storage medium comprising computer program instructions. For example, the computer-readable storage medium may be a ROM, a RAM, a CD-ROM, a magnetic tape, a floppy disk, an optical data storage device, etc. The program instructions in the storage medium, when executed by the processor of the terminal 1800, enable the terminal 1800 to perform the method for collecting information resources described above.

Other examples of the present disclosure will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for collecting information resources, the method **characterized by** comprising:
monitoring, by an operating system of a terminal, a display page of an application for collect events occurring on said display page, the collect events each corresponding to a selection by a user of a collect button displayed on the display page;
wherein the display page is configured to display information resources to be collected and said information resources comprise key information configured to identify said information resources;
then, when a collect event occurs on a display page of the application, acquiring (201) said key information of said information resources by said operating system; and
storing (202) said key information of said information resources in a centralized favourites, wherein the centralized favourites is configured to display, on a specified interface, key information of information resources collected from at least one application.

2. The method of claim 1, further comprising:
displaying (203) a collection completion notification message for the information resources to be collected at a top layer of a display of the terminal; and
switching (203) to the specified interface and displaying the centralized favourites in a specified area of the specified interface after a confirmation operation on the collection completion notification message has been detected;
wherein said key information is located at a top of the specified area.

3. The method of claim 1, further comprising:
determining a quantity of information resources displayable in a specified area based on a footprint of the centralized favourites on the specified area during display;
selecting (801) a preset number of latest collected information resources with a number matching with the quantity of information resources from the centralized favourites; and
displaying (802) key information of the preset number of collected information resources in the specified area in a collection time order from the latest to the earliest.

4. The method of claim 3, further comprising:
after a selected operation on any key information of the preset number of key information has been detected, determining a target application that matches with a specified information resource as selected in accordance with address link information corresponding to the specified information resource when the specified information resource is webpage content; and
opening the target application and displaying the specified information resource through the target application.

5. The method of claim 4, wherein determining the application that matches with the specified information resource in accordance with the address link information corresponding to the specified information resource includes:
determining the application that matches with the specified information resource in accordance with a domain name in the address link information corresponding to the specified information resource;
wherein a list of corresponding relationship between the domain names and the applications is stored locally in advance.

6. The method of claim 5, further comprising:
receiving an update command from a first server to update the list and completing an updating of the list in accordance with the update command.

7. The method of claim 1, wherein acquiring said key information includes:
determining categories of said information resources; and
acquiring said key information in accordance with the categories of the information resources to be collected.

8. The method of claim 7, wherein acquiring said key information in accordance with the categories of said information resources includes:
taking at least headlines and pictures of the information resources as the key information when the information resources are webpage content; and
taking at least content keywords of the information resources as the key information when the information resources are non-webpage content.

9. The method of claim 8, further comprising:
after a selected operation on the key information of the information resources has been detected, acquiring the information resources from a second server in accordance with address link information corresponding to the information resources when the information resources identified with selected key information are webpage content; and
reformatting the information resources and displaying reformatted information resources when the information resources identified with selected key information are graphic content.

10. A terminal (1800);
wherein the terminal is configured to monitor, via an operating system of the terminal, a display page of an application for collect events occurring on said display page, the collect events each corresponding to a selection by a user of a collect button displayed on the display page; wherein the display page is configured to display information resources to be collected and said information resources comprise key information configured to identify said information resources;
the terminal comprising a device for collecting information resources, the device comprising:
an acquisition module (1201) configured to, when a collect event occurs on a display page of the application, acquire said key information via said operating system; and
a storage module (1202) configured to store said key information in a centralized favourites, wherein the centralized favourites is configured to display, on a specified interface, key information of information resources collected from at least one application.

11. The terminal of claim 10, wherein the device further comprises:
a display module (1203) configured to display a collection completion notification message for said information resources at a top layer of a display of the terminal and display the centralized favourites in a specified area of the specified interface; and
a switching module (1204) configured to switch to the specified interface after a confirmation operation on the completion notification message has been detected;
wherein said key information is located at a top of the specified area.

12. The terminal of claim 10, wherein the device further comprises:
a display module (1203) configured to display a show-detail button in a specified area, wherein the specified area is configured to display the centralized favourites and the show-detail button is configured to display said key information; and display key information of a plurality of collected information resources stored in the centralized favourites in a collection time order from the latest to the earliest after a selected operation on the show-detail button has been detected.

13. The terminal of claim 10, wherein the device further comprises:
a determination module (1205) configured to determine a quantity of information resources displayable in a specified area based on a footprint of the centralized favorites on the specified area during display;
a selection module (1206) configured to select a preset number of latest collected information resources with a number matching with the quantity of information recourses from the centralized favourites; and
a display module (1203) configured to display key information of the preset number of collected information resources in the specified area in a collection time order from the latest to the earliest.

14. The terminal of claim 10, wherein the device further comprises:
an acquisition module (1201) configured to determine categories of the information resources; and
an acquiring module (1201) configured to acquire the key information in accordance with the categories of the information resources.

15. A computer-readable storage medium, comprising computer program instructions therein, **characterised in that** the computer program instructions, when executed on a processor, cause the processor to perform the method for collecting information resources according to claims 1-9.

## Patentansprüche

1. Verfahren zum Sammeln von Informationsressourcen, wobei das Verfahren **dadurch gekennzeichnet ist, dass** es umfasst:
Überwachen, durch ein Betriebssystem eines Endgeräts, einer Anzeigeseite einer Anwendung zum Sammeln von Ereignissen, die auf der Anzeigeseite auftreten, wobei die Sammelereignisse jeweils einer Auswahl durch einen Anwender eines Sammelknopfs, der auf der Anzeigeseite angezeigt wird, entsprechen;
wobei die Anzeigeseite konfiguriert ist, Informationsressourcen anzuzeigen, die zu sammeln sind, und die Informationsressourcen Schlüsselinformationen umfassen, die konfiguriert sind, die Informationsressourcen zu identifizieren;
dann, wenn ein Sammelereignis auf einer Anzeigeseite der Anwendung auftritt, Beschaffen (201) der Schlüsselinformationen der Informationsressourcen durch das Betriebssystem; und
Speichern (202) der Schlüsselinformationen der Informationsressourcen in zentralisierten Favoriten, wobei die zentralisierten Favoriten konfiguriert sind, auf einer bestimmten Schnittstelle Schlüsselinformationen von Informationsressourcen anzuzeigen, die von mindestens einer Anwendung gesammelt werden.

2. Verfahren nach Anspruch 1, weiter umfassend:
Anzeigen (203) einer Sammelabschlussbenachrichtigungsnachricht für die zu sammelnden Informationsressourcen in einer obersten Schicht einer Anzeige des Endgeräts; und
Schalten (203) zu der bestimmten Schnittstelle und Anzeigen der zentralisierten Favoriten in einem bestimmten Bereich der bestimmten Schnittstelle, nachdem ein Bestätigungsbetrieb in der Sammelabschlussbenachrichtigungsnachricht detektiert worden ist;
wobei die Schlüsselinformationen in einem Oberteil des bestimmten Bereichs liegen.

3. Verfahren nach Anspruch 1, weiter umfassend:
Ermitteln einer Menge an Informationsressourcen, die in einem bestimmten Bereich anzeigbar sind, basierend auf einem Fußabdruck der zentralisierten Favoriten auf dem bestimmten Bereich während Anzeige;
Auswählen (801) einer voreingestellten Zahl zuletzt gesammelter Informationsressourcen mit einer Zahl, die mit der Menge an Informationsressourcen aus den zentralisierten Favoriten übereinstimmt; und
Anzeigen (802) von Schlüsselinformationen der voreingestellten Zahl gesammelter Informationsressourcen in dem bestimmten Bereich in einer Sammelzeitreihenfolge von der aktuellsten zu der frühsten.

4. Verfahren nach Anspruch 3, weiter umfassend:
nachdem ein ausgewählter Betrieb an beliebigen Schlüsselinformationen der voreingestellten Zahl von Schlüsselinformationen detektiert worden ist, Ermitteln einer Zielanwendung, die mit einer bestimmten Informationsressource, wie in Übereinstimmung mit Adresslinkinformationen ausgewählt, übereinstimmt, die der bestimmten Informationsressource entsprechen, wenn die bestimmte Informationsressource Webseiteninhalt ist; und
Öffnen der Zielanwendung und Anzeigen der bestimmten Informationsressource durch die Zielanwendung.

5. Verfahren nach Anspruch 4, wobei Ermitteln der Anwendung, die mit der bestimmten Informationsressource übereinstimmt, in Übereinstimmung mit den Adresslinkinformationen, die der bestimmten Informationsressource entsprechen, beinhaltet:
Ermitteln der Anwendung, die mit der bestimmten Informationsressource übereinstimmt, in Übereinstimmung mit einem Domänennamen in den Adresslinkinformationen, die der bestimmten Informationsressource entsprechen;
wobei eine Liste entsprechender Beziehung zwischen den Domänennamen und den Anwendungen lokal im Voraus gespeichert wird.

6. Verfahren nach Anspruch 5, weiter umfassend:
Empfangen eines Aktualisierungsbefehls von einem ersten Server, die Liste zu aktualisieren und eine Aktualisierung der Liste in Übereinstimmung mit dem Aktualisierungsbefehl abzuschließen.

7. Verfahren nach Anspruch 1, wobei Beschaffen der Schlüsselinformationen beinhaltet:
Ermitteln von Kategorien der Informationsressourcen; und
Beschaffen der Schlüsselinformationen in Übereinstimmung mit den Kategorien der zu sammelnden Informationsressourcen.

8. Verfahren nach Anspruch 7, wobei Beschaffen der Schlüsselinformationen in Übereinstimmung mit den Kategorien der Informationsressourcen beinhaltet:
Heranziehen mindestens von Kopfzeilen und Bildern der Informationsressourcen als die Schlüsselinformationen, wenn die Informationsressourcen Webseiteninhalt sind; und
Heranziehen mindestens von Inhaltsschlüsselworten der Informationsressourcen als die Schlüsselinformationen, wenn die Informationsressourcen Nicht-Webseiteninhalt sind.

9. Verfahren nach Anspruch 8, weiter umfassend:
nachdem ein ausgewählter Betrieb an den Schlüsselinformationen der Informationsressourcen detektiert worden ist, Beschaffen der Informationsressourcen von einem zweiten Server in Übereinstimmung mit Adresslinkinformationen, die den Informationsressourcen entsprechen, wenn die Informationsressourcen, die mit ausgewählten Schlüsselinformationen identifiziert werden, Webseiteninhalt sind; und
Umformatieren der Informationsressourcen und Anzeigen von umformatierten Informationsressourcen, wenn die Informationsressourcen, die mit ausgewählten Schlüsselinformationen identifiziert werden, Grafikinhalt sind.

10. Endgerät (1800);
wobei das Endgerät konfiguriert ist, über ein Betriebssystem des Endgeräts eine Anzeigeseite einer Anwendung zum Sammeln von Ereignissen, die auf der Anzeigeseite stattfinden, zu überwachen, wobei die Sammelereignisse jeweils einer Auswahl von einem Anwender eines Sammelknopfes, der auf der Anzeigeseite angezeigt wird, entsprechen;
wobei die Anzeigeseite konfiguriert ist, zu sammelnde Informationsressourcen anzuzeigen und die Informationsressourcen Schlüsselinformationen umfassen, die konfiguriert sind, die Informationsressourcen zu identifizieren;
wobei das Endgerät eine Vorrichtung zum Sammeln von Informationsressourcen umfasst, wobei die Vorrichtung umfasst:
ein Beschaffungsmodul (1201), konfiguriert zum, wenn ein Sammelereignis auf einer Anzeigeseite der Anwendung stattfindet, Beschaffen der Schlüsselinformationen durch das Betriebssystem; und
ein Speichermodul (1202), konfiguriert zum Speichern der Schlüsselinformationen in zentralisierten Favoriten, wobei die zentralisierten Favoriten konfiguriert sind, auf einer bestimmten Schnittstelle Schlüsselinformationen von Informationsressourcen anzuzeigen, die von mindestens einer Anwendung gesammelt werden.

11. Endgerät nach Anspruch 10, wobei die Vorrichtung weiter umfasst:
ein Anzeigemodul (1203), konfiguriert zum Anzeigen einer Sammelabschlussbenachrichtigungsnachricht für die Informationsressourcen in einer obersten Schicht einer Anzeige des Endgeräts und Anzeigen der zentralisierten Favoriten in einem bestimmten Bereich der bestimmten Schnittstelle; und
ein Schaltmodul (1204), konfiguriert zum Schalten zu der bestimmten Schnittstelle, nachdem ein Bestätigungsbetrieb in der Sammelabschlussbenachrichtigungsnachricht detektiert worden ist;
wobei die Schlüsselinformationen in einem Oberteil des bestimmten Bereichs liegen.

12. Endgerät nach Anspruch 10, wobei die Vorrichtung weiter umfasst:
ein Anzeigemodul (1203), konfiguriert zum Anzeigen eines Detailansichtsknopfes in einem bestimmten Bereich, wobei der bestimmte Bereich konfiguriert ist, die zentralisierten Favoriten anzuzeigen, und der Detailansichtsknopf konfiguriert ist, die Schlüsselinformationen anzuzeigen; und Anzeigen von Schlüsselinformationen einer Vielzahl von gesammelten Informationsressourcen, die in den zentralisierten Favoriten gespeichert sind, in einer Sammelzeitreihenfolge von dem aktuellsten zu dem frühsten, nachdem ein ausgewählter Betrieb an dem Detailansichtsknopf detektiert worden ist.

13. Endgerät nach Anspruch 10, wobei die Vorrichtung weiter umfasst:
ein Ermittlungsmodul (1205), konfiguriert zum Ermitteln einer Menge an Informationsressourcen, die in einem bestimmten Bereich anzeigbar sind, basierend auf einem Fußabdruck der zentralisierten Favoriten in dem bestimmten Bereich während Anzeige;
ein Auswahlmodul (1206), konfiguriert zum Auswählen einer voreingestellten Zahl zuletzt gesammelter Informationsressourcen mit einer Zahl, die mit der Menge an Informationsressourcen von den zentralisierten Favoriten übereinstimmt; und
ein Anzeigemodul (1203), konfiguriert zum Anzeigen von Schlüsselinformationen der voreingestellten Zahl gesammelter Informationsressourcen in dem bestimmten Bereich in einer Sammelzeitreihenfolge von der aktuellsten zu der frühsten.

14. Endgerät nach Anspruch 10, wobei die Vorrichtung weiter umfasst:
ein Beschaffungsmodul (1201), konfiguriert zum Ermitteln von Kategorien der Informationsressourcen; und
ein Beschaffungsmodul (1201), konfiguriert zum Beschaffen der Schlüsselinformationen in Übereinstimmung mit den Kategorien der Informationsressourcen.

15. Computerlesbares Speichermedium, darin Computerprogrammanweisungen umfassend, **dadurch gekennzeichnet, dass** die Computerprogrammanweisungen, wenn auf einem Prozessor ausgeführt, den Prozessor veranlassen, das Verfahren zum Sammeln von Informationsressourcen nach den Ansprüchen 1-9 durchzuführen.

## Revendications

1. Procédé pour collecter des ressources d'informations, le procédé étant **caractérisé en ce qu'**il comprend :
une surveillance, par un système d'exploitation d'un terminal, d'une page d'affichage d'une application pour des événements de collecte survenant sur ladite page d'affichage, les événements de collecte correspondant chacun à une sélection par un utilisateur d'un bouton de collecte affiché sur la page d'affichage ;
dans lequel la page d'affichage est configurée pour afficher des ressources d'informations à collecter et lesdites ressources d'informations comprennent des informations capitales configurées pour identifier lesdites ressources d'informations ;
ensuite, lorsqu'un événement de collecte survient sur une page d'affichage de l'application, une acquisition (201) desdites informations capitales desdites ressources d'informations par ledit système d'exploitation ; et
un stockage (202) desdites informations capitales desdites ressources d'informations dans des favoris centralisés, dans lequel les favoris centralisés sont configurés pour afficher, sur une interface spécifiée, des informations capitales de ressources d'informations collectées à partir d'au moins une application.

2. Procédé selon la revendication 1, comprenant en outre :
un affichage (203) d'un message de notification d'achèvement de collecte pour les ressources d'informations à collecter au niveau d'une couche supérieure d'un affichage du terminal ; et
une commutation (203) sur l'interface spécifiée et un affichage des favoris centralisés dans une zone spécifiée de l'interface spécifiée après qu'une opération de confirmation sur le message de notification d'achèvement de collecte a été détectée ;
dans lequel lesdites informations capitales sont situées au niveau d'un haut de la zone spécifiée.

3. Procédé selon la revendication 1, comprenant en outre :
une détermination d'une quantité de ressources d'informations affichables dans une zone spécifiée sur la base d'une empreinte des favoris centralisés sur la zone spécifiée pendant un affichage ;
une sélection (801) d'un nombre prédéfini de ressources d'informations collectées les plus récentes avec un nombre correspondant à la quantité de ressources d'informations provenant des favoris centralisés ; et
un affichage (802) d'informations capitales du nombre prédéfini de ressources d'informations collectées dans la zone spécifiée dans un ordre temporel de collecte du plus récent au moins récent.

4. Procédé selon la revendication 3, comprenant en outre :
après qu'une opération sélectionnée sur de quelconques informations capitales du nombre prédéfini d'informations capitales a été détectée, une détermination d'une application cible qui correspond à une ressource d'informations spécifiée telle que sélectionnée conformément à des informations de lien d'adresse correspondant à la ressource d'informations spécifiée lorsque la ressource d'information spécifiée est un contenu de page Web ; et
une ouverture de l'application cible et un affichage de la ressource d'informations spécifiée par le biais de l'application cible.

5. Procédé selon la revendication 4, dans lequel la détermination de l'application qui correspond à la ressource d'informations spécifiée conformément aux informations de lien d'adresse correspondant à la ressource d'informations spécifiée inclut :
une détermination de l'application qui correspond à la ressource d'informations spécifiée conformément à un nom de domaine dans les informations de lien d'adresse correspondant à la ressource d'informations spécifiée ;
dans lequel une liste de relation correspondante entre les noms de domaines et les applications est stockée localement à l'avance.

6. Procédé selon la revendication 5, comprenant en outre :
une réception d'une commande d'actualisation en provenance d'un premier serveur pour actualiser la liste et un achèvement d'une actualisation de la liste conformément à la commande d'actualisation.

7. Procédé selon la revendication 1, dans lequel l'acquisition desdites informations capitales inclut :
une détermination de catégories desdites ressources d'informations ; et
une acquisition desdites informations capitales conformément aux catégories des ressources d'informations à collecter.

8. Procédé selon la revendication 7, dans lequel l'acquisition desdites informations capitales conformément aux catégories desdites ressources d'informations inclut :
une prise en compte au moins de titres courants et d'images des ressources d'informations en tant qu'informations capitales lorsque les ressources d'informations sont un contenu de page Web ; et
une prise en compte au moins de mots clés de contenu des ressources d'informations en tant qu'informations capitales lorsque les ressources d'informations ne sont pas un contenu de page Web.

9. Procédé selon la revendication 8, comprenant en outre :
après qu'une opération sélectionnée sur les informations capitales des ressources d'informations a été détectée, une acquisition des ressources d'informations en provenance d'un second serveur conformément à des informations de lien d'adresse correspondant aux ressources d'informations lorsque les ressources d'informations identifiées avec des informations capitales sélectionnées sont un contenu de page Web ; et
un reformatage des ressources d'informations et un affichage de ressources d'informations reformatées lorsque les ressources d'informations identifiées avec des informations capitales sélectionnées sont du contenu graphique.

10. Terminal (1800) ;
dans lequel le terminal est configuré pour surveiller, via un système d'exploitation du terminal, une page d'affichage d'une application pour des événements de collecte survenant sur ladite page d'affichage, les événements de collecte correspondant chacun à une sélection par un utilisateur d'un bouton de collecte affiché sur la page d'affichage ;
dans lequel la page d'affichage est configurée pour afficher des ressources d'informations à collecter et lesdites ressources d'informations comprennent des informations capitales configurées pour identifier lesdites ressources d'informations ;
le terminal comprenant un dispositif pour collecter des ressources d'informations, le dispositif comprenant :
un module d'acquisition (1201) configuré pour, lorsqu'un événement de collecte survient sur une page d'affichage de l'application, acquérir lesdites informations capitales via ledit système d'exploitation ; et
un module de stockage (1202) configuré pour stocker lesdites informations capitales dans des favoris centralisés, dans lequel les favoris centralisés sont configurés pour afficher, sur une interface spécifiée, des informations capitales de ressources d'informations collectées à partir d'au moins une application.

11. Terminal selon la revendication 10, dans lequel le dispositif comprend en outre :
un module d'affichage (1203) configuré pour afficher un message de notification d'achèvement de collecte pour lesdites ressources d'informations au niveau d'une couche supérieure d'un affichage du terminal et afficher les favoris centralisés dans une zone spécifiée de l'interface spécifiée ; et
un module de commutation (1204) configuré pour commuter sur l'interface spécifiée après qu'une opération de confirmation sur le message de notification d'achèvement a été détectée ;
dans lequel lesdites informations capitales sont situées au niveau d'un haut de la zone spécifiée.

12. Dispositif selon la revendication 10, dans lequel le dispositif comprend en outre :
un module d'affichage (1203) configuré pour afficher un bouton Montrer les détails dans une zone spécifiée, dans lequel la zone spécifiée est configurée pour afficher les favoris centralisés et le bouton Montrer les détails est configuré pour afficher lesdites informations capitales ; et afficher des informations capitales d'une pluralité de ressources d'informations collectées stockées dans les favoris centralisés dans un ordre temporel de collecte du plus récent au moins récent après qu'une opération sélectionnée sur le bouton Montrer les détails a été détectée.

13. Terminal selon la revendication 10, dans lequel le dispositif comprend en outre :
un module de détermination (1205) configuré pour déterminer une quantité de ressources d'informations affichables dans une zone spécifiée sur la base d'une empreinte des favoris centralisés sur la zone spécifiée pendant un affichage ;
un module de sélection (1206) configuré pour sélectionner un nombre prédéfini de ressources d'informations collectées les plus récentes avec un nombre correspondant à la quantité de ressources d'informations en provenance des favoris centralisés ; et
un module d'affichage (1203) configuré pour afficher des informations capitales du nombre prédéfini de ressources d'informations collectées dans la zone s&pécifiée dans un ordre temporel de collecte du plus récent au moins récent.

14. Terminal selon la revendication 10, dans lequel le dispositif comprend en outre :
un module d'acquisition (1201) configuré pour déterminer des catégories des ressources d'informations ; et
un module d'acquisition (1201) configuré pour acquérir les informations capitales conformément aux catégories des ressources d'informations.

15. Support de stockage lisible par ordinateur, comprenant des instructions de programme d'ordinateur, **caractérisé en ce que** les instructions de programme d'ordinateur, lorsqu'elles sont exécutées sur un processeur, amènent le processeur à réaliser le procédé pour collecter des ressources d'informations selon les revendications 1-9.
